# EUROPEAN PATENT APPLICATION

(11) **EP 2 178 242 A1**
(43) Date of publication of application: **21.04.2010**
(21) Application number: 08305680.4
(22) Date of filing: 14.10.2008
(51) Int. Cl.: H04L 12/12, H04W 52/02, H04L 12/28, H04L 12/56

(54) **A method of using power saving mode in a dual mode device to service client devices**

(71) Applicant: Thomson Licensing, 92443 Issy-les-Moulineaux Cedex (FR)
(72) Inventor: Cheng, Linxiang, 100085, BEIJING (CN); Zhang, Zhigang, 100085, BEIJING (CN); Ma, Xiao Jun, 100085, BEIJING (CN); Wang, Xianlei, 100085, BEIJING (CN); Zhang, Yanfeng, 100085, BEIJING (CN)
(74) Representative: Ruellan-Lemonnier, Brigitte

(57) **Abstract**

A method of using the power saving mode of a wireless protocol used in a time division multiplexed cable interface includes transmitting a power saving indication from a station to an access point using the cable interface and entering, by the station, into a power saving mode with respect to the cable interface. With the cable interface in a power saving mode, the station can switch to a wireless LAN mode and service clients using a wireless interface. The station receives beacon information periodically from the cable interface. The beacon information useful in determining whether the station should return to a cable interface operation mode for operations with the access point.

## Description

### FIELD OF THE INVENTION

The present invention relates to data transmission technology, and particularly to a method for accessing a client device while using a power saving mode in a cable system employing a time division multiplexed protocol.

### BACKGROUND

There are some existing specifications which define the communications and operational support interface requirements for a data-over-cable system. One of these specifications is data over cable service interface specification (DOCSIS), an international standard which permits the addition of high-speed data transfer to an existing cable television (CATV) system and is employed by many cable television operators to provide Internet access over their existing hybrid fiber coaxial (HFC) infrastructure.

Cable modems based on solutions such as DOCSIS are expensive and are not suitable to provide a quality of service (QoS) that is sensitive to real time audio communication and video streaming services in cable networks. It is desirable to develop a new system to transmit data through a CATV cable access network which can guarantee good quality of service (QoS) and leverages off of existing standard protocols at a reasonable cost. A user-terminal device or modem which operates on an existing CATV system and provides internet-style data services to client devices, such as devices on a local area network, is also desirable in a cable data system. In such a modem, reasonable opportunity to support both a cable interface and a wireless interface is sought to ensure sufficient bandwidth availability for a good quality user experience.

### SUMMARY

The present invention is directed to methods and apparatus which can utilize a power saving mode of a wireless protocol in a time division multiplex cable interface to suspend data transfers between a station and an access point. The station enters the power saving mode of the protocol that is used on the cable interface to stop data traffic to the station. The station, being a dual mode device having a cable interface and a wireless interface, can then activate the wireless interface to service wireless user/client devices and buffer data intended for the access point of the cable interface. While in the power saving mode, the access point buffers data intended for the station. Also, while in power saving mode, the station periodically exits power saving mode and re-enters cable interface mode to receive beacon frame information and determines if the access point plans to send data to the station on the cable interface. When the station exits the power saving mode, the cable interface is re-activated and the access point and station can exchange their respective buffered data.

In one embodiment, a method to service wireless user/client devices includes transmitting a power saving indication from a station to an access point using a cable interface. The station then enters a power saving mode with respect to the cable interface. As a result, the cable interface transaction requirements (being active for uplink and downlink operations) for the station are deferred and the station can service the wireless user/client device interface while in the power saving mode of the cable interface. The station can exit the power saving mode to receive information concerning station activity from the access point. This information is provided in a beacon frame sent to all stations, active or not, on the cable interface. The station in power save mode can then determine, based on the information concerning station activity from the beacon frame, if it can re-enter the power saving mode of the cable interface.

In another embodiment of the invention, a station includes a cable interface, a wireless interface, and a processor that determines when the station can refrain from entering a power saving mode of the cable interface based on beacon information acquired using the cable interface. In the station, the wireless interface is active when the cable interface is in power saving mode. The cable interface is periodically active to receive the beacon information. When the station is in the power saving mode, the station buffers data acquired via the wireless interface. The wireless interface of the station uses standard IEEE 802.11 frame formats to communicate with wireless devices while the station is in power saving mode with respect to the cable interface.

Additional features and advantages of the invention are made apparent from the following detailed description of illustrative embodiments which proceeds with reference to the accompanying figures.

### BRIEF DESCRIPTION OF THE DRAWINGS

Fig. 1 illustrates a simplified exemplary TDF access network architecture;
Fig. 2 illustrates the 802.11 MAC sublayer in OSI reference model;
Fig. 3 illustrates an implementation of a TDF transmission entity in OSI reference model;
Fig. 4 illustrates an example of a mode entrance procedure;
Fig. 5 illustrates an example of a TDF superframe structure;
Fig. 6 illustrates an example wireless dual mode device;
Fig. 7 illustrates an example beacon frame format;
Fig. 8 illustrates an example period mapping format;
Fig. 9 illustrates an example resource request format;
Fig. 10 illustrates an example of a flow diagram of WDMD STA operation; and
Fig. 11 illustrates an example of a flow diagram of AP operation.

### DETAILED DISCUSSION OF THE EMBODIMENTS

### General Description

As used herein, "/" denotes alternative names for the same or similar components or structures. That is, a "/" can be taken as meaning "or" as used herein. Unicast transmissions are between a single sender/transmitter and a single receiver. Broadcast transmissions are between a single sender/transmitter and all receivers within receiving range of the transmitter. Multicast transmissions are between a single sender/transmitter and a subset of the receivers within receiving range of the transmitter where the subset of receivers within receiving range of the transmitter may be the entire set. That is, multicast may include broadcast and is therefore a broader term than broadcast as used herein. Data/content is transmitted in packets or frames.

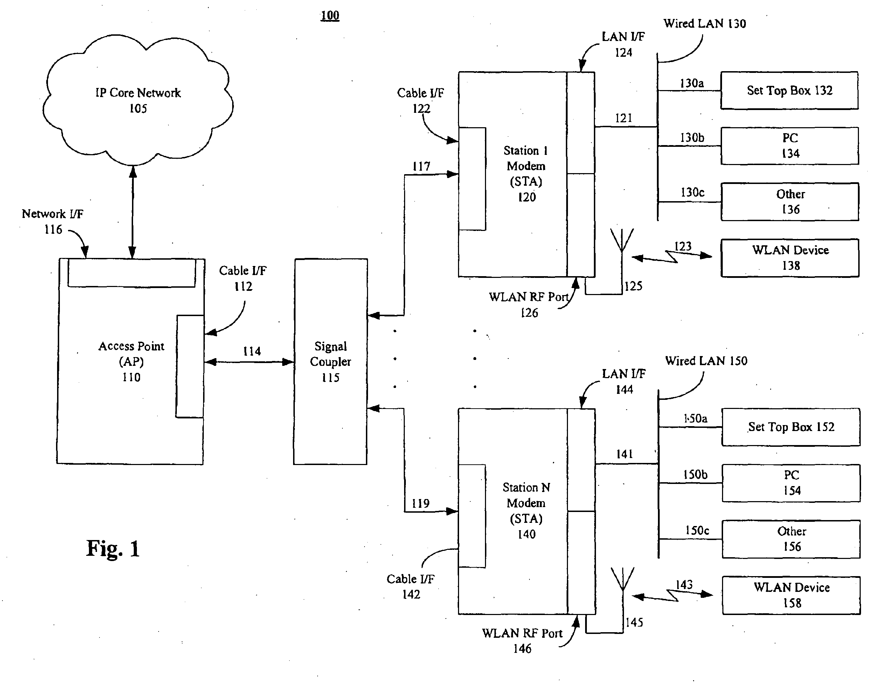

In order to provide data service over existing coaxial cable TV system (CATV), at least one implementation deploys a time division function (TDF) protocol compliant access point (AP) and stations (STAs) in a cable access network. The AP and STAs are connected via couplers in a hierarchical tree structure. In this way, a user at home can access the remote internet protocol (IP) core network via a cable access network. Access to the IP core by the user opens up services such as, but not limited to, Internet access, digital telephone access (e.g. voice over internet protocol), and cable television programming. An example network architecture 100 is illustrated in Figure 1.

Figure 1 depicts one embodiment of a network that accesses an IP core 105. The IP core may be any digital network that uses an Internet Protocol or equivalent digital data transfer protocol. In the example embodiment of Figure 1, a time division function (TDF) protocol compliant access point (AP) 110 has a network interface 116, such as wired LAN or optical interface, in connection with the IP core network 105, and a cable interface 112 in connection with a cable access network. Many such access points may be connected to the IP core network. The cable access interface 112 of AP 110 may access any form of cable such as optical fiber, coaxial, or other physically connected communications medium. As a result, the cable network may include any form of cable such as optical fiber, coaxial, or other physically connected communications medium. The cable network can include a signal coupler 115, if required, and distribution mediums such as interconnecting cables 117 and 119. Although only two such distribution cables are shown in Figure 1, it is understood that a multiplicity of such distribution connections are possible.

In the example of Figure 1, the distribution cables 117 and 119 connect to TDF protocol compliant stations (STAs) 120, 140 via cable interfaces 122 and 142 respectively. STA cable interfaces 122 and 142 may also access any form cable such as optical fiber, coaxial, or other physically connected communications medium. STAs 120 and 140 are TDF compliant and act as user-terminals which can connect with the cable access network with a multiplicity of interfaces for a user/client. Those interfaces include, but are not limited to user/client devices operational on a conventional physical local area network (LAN) and a wireless local area network (WLAN). One example LAN is an Ethernet compliant network. One example wireless network is an IEEE 802.11 compatible wireless network.

Figure 1 depicts a station 1 modem 120 and station N modem 140 as having similar interfaces. However, this representation is merely exemplary because stations of different capabilities may be attached to the cable network provided the stations are communicatively compliant with the AP 110. For example, a station modem may have all of the user interfaces shown in Figure 1 or only a selected subset. In Figure 1, station 1 is configured to support a LAN interface 124 driving LAN connection 121 to a physical wired LAN 130 having stubs 130a, 130b, and 130c. The stubs support LAN compliant devices such as a set top box 132 for television and other services, a personal computer (PC) 134 for network services, such as Internet service, and other LAN compliant devices 136 which may include devices that support any type of digital service that provides multimedia services such as video, audio, telephony, and data. Such LAN compliant devices 136 include but are not limited to a fax, a printer, a digital telephone, a server, etc. Figure 1 depicts station 120 as also providing wireless services via WLAN radio frequency (RF) port 126 to drive antenna 125. The resulting wireless transmissions 123 can be used by a WLAN compliant device 138 to provide services to a user/client that include any of multimedia voice, audio, telephony, and data. Although only one wireless device 138 is shown, a multiplicity of such wireless devices may be used. Likewise, Station N also includes LAN interface 144 to drive LAN connection 141 for physical LAN 150 having stubs 150a, 150b, and 150c. Such stubs support communications with such LAN compatible devices such as set top box 152, PC 154, and other devices 156. WLAN RF port 146 supports antenna 145 providing link 143 for communication with WLAN device 158. It is understood by those of skill in the art that appropriate interface drivers exist for each of the network interface 116, cable interfaces 112, 122, 142, wired LAN interfaces 124, 144, and WLAN RF interfaces 126, 146 in Figure 1.

In one embodiment of the network 100, both TDF compliant APs and STAs implement a protocol stack separately in a logically linked control sublayer, MAC sublayer and physical layer, according to IEEE 802.11 series specifications. However, in the MAC sublayer, the TDF APs and STAs replace the IEEE 802.11 frame transmission entity with a TDF frame/message/signal transmission entity. So, the MAC sublayer for TDF APs and STAs includes an IEEE 802.11 frame encapsulation/decapsulation entity and TDF frame transmission entity, while the MAC sublayer for IEEE 802.11 compliant APs and STAs includes IEEE 802.11 compliant frame encapsulation/decapsulation entity and an IEEE 802.11 frame transmission entity. For an integrated AP and STA, the TDF frame transmission entity and IEEE 802.11 frame transmission entity may co-exist at the same time, to provide both IEEE 802.11 and TDF functionality. The switch between the two modes can be realized by either a manual or a dynamic configuration.

An example system, such as in Figure 1, that includes one or more APs, a cable network, and one or more STAs may also be termed an asymmetric data over coaxial cable (ADoC) system. One or more protocol compliant ADoC access points (APs) and one or more stations (STAs) are deployed in the ADoCs cable access network. Thus, as used herein, the terms "ADoC system" and "TDF system" may be considered interchangeable because the ADoC system is a particular implementation of a TDF system. In the ADoC system, as in Figure 1, the AP and STAs are connected via couplers in a hierarchy tree structure of a cable network that includes elements such as cable, splitters, amplifiers, relays, repeaters, switches, converters, and the like that are typical of cable network configurations.

### TDF Protocol Introduction

The AP 110 and the STAs 120 and 140 of Figure 1 utilize a TDF protocol to communicate on the cable medium. In one embodiment of the TDF protocol, IEEE 802.11 frames are transmitted via the cable media instead of over the air. The purpose of utilizing the IEEE 802.11 mechanism is to make use of the mature hardware and software implementation of IEEE 802.11 protocol stacks. Thus, TDF, using IEEE 802.11 frames, is used in the cable network of Figure 1 as the communication standard between an AP and its associated STAs.

One feature of TDF is its unique medium access control method for transmitting IEEE 802.11 data frames. In one embodiment, TDF does not utilize the conventional IEEE 802.11 DCF (distributed coordination function) or PCF (point coordination function) mechanism to exchange MAC frames, which include MSDU (MAC service data unit) and MMPDU (MAC management protocol data unit). Instead, TDF uses a time division access method to transmit MAC frames/messages/signals. So the TDF is an access method which defines a detailed implementation of a frame transmission entity located in MAC sublayer.

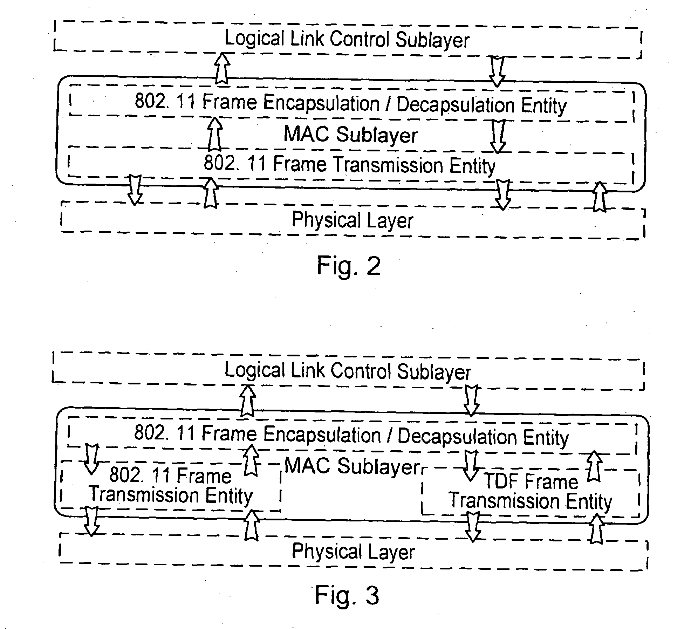

Figure 2 illustrates the standard IEEE 802.11 MAC sublayer protocol in the open system interconnection (OSI) reference model. In comparison, Figure 3 illustrates details of the frame transmission entities for the TDF protocol in the OSI reference model.

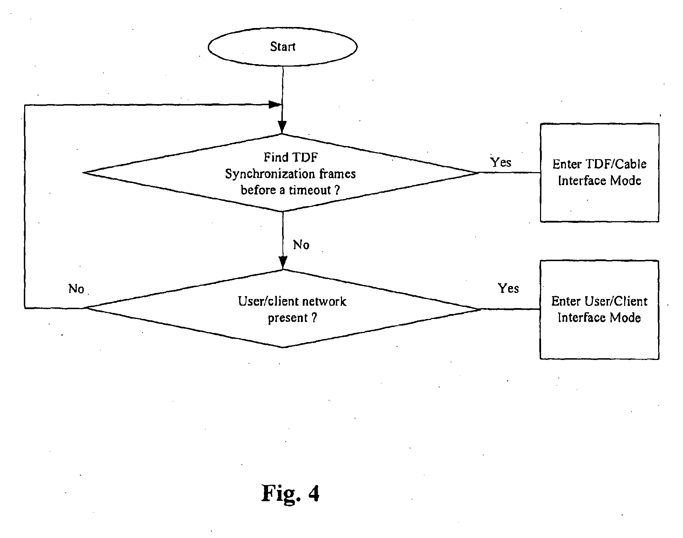

In one embodiment, the stations, such as STA 120 and STA 140, operate in two communication modes. One mode is the standard IEEE 802.11 operation mode, which is also known as a user/client interface mode, which obeys the frame structure and transmission mechanism defined in IEEE 802.11 series standard. The other mode is the TDF operation mode, which is also known as the cable interface mode. In one embodiment, the determination of which operation mode to enter when a STA is started is indicated in Figure 4. Once a STA receives a synchronization frame/message/signal from an AP, the STA enters into TDF mode. If there is no synchronization frame received within a preset timeout, then the STA remains or shifts into the user/client interface mode. More operational mode switching criteria are provided herein.

### TDF Protocol Functional Descriptions:

### Access Method

The physical layer in a TDF station may have multiple data transfer rate capabilities that allow implementations to perform dynamic rate switching with the objective of improving performance and device maintenance. In one embodiment, a station may support at least three types of data rates: 54 Mbps, 18 Mbps and 6 Mbps. Data service may be provided mainly at a 54 Mbps data rate. If there are problems for a STA to support 54 Mbps data transmission, the STA may temporarily switch to 18 Mbps data rate. The 6 Mbps data rate operation mode is designed for the purpose of network maintenance and station debugging.

The data rate may be configured statically before a TDF station enters the TDF communication procedure, and remain the same during the whole communication process. On the other hand, the TDF station may also support dynamic data rate switching during the service. The criteria for the data rate switching may be based on the channel signal quality and other factors.

The fundamental access method of the TDF protocol is time division multiple access (TDMA), which allows multiple users to share the same channel by dividing it into multiple different timeslots. The STAs receive downloads and transmit uploads in rapid succession, one after the other, each using their own timeslot within a TDF superframe assigned by the AP. Downlink traffic is defined as the transport of data from an AP to a STA. Examples of downlink traffic include requested digital data/content, such as audio or video requested by a user/client device. Downlink data can be either unicast, broadcast, or multicast. Uplink traffic is defined as the transport of data from a STA to the AP. Examples of uplink traffic include a user request for digital data/content or commands to the AP to perform some function. Uplink data may be either unicast or multicast.

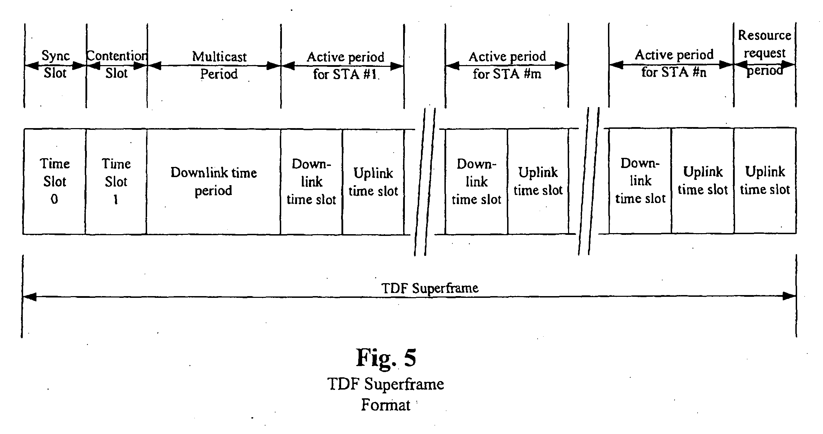

Figure 5 illustrates an example of a TDF superframe structure and the timeslot allocations for a typical TDF superframe when there are "n" STAs. As shown in Figure 5, there is a fixed number of timeslots per TDF superframe, which includes one synchronization timeslot used to send clock synchronization information from an AP to one or more STAs and one contention timeslot used to send registration request for uplink timeslot allocation. Uplink timeslots allocated to a STA are used by the indicated registered STA to send data and some management frames to an AP. Downlink timeslots are used by the AP to transmit data and registration response management frames to the STAs. Except for the synchronization timeslot, all other timeslots may have the same duration. The multicast period of Figure 5 uses one or more pre-determined number of timeslots to accommodate the length of the multicast data. The value of a typical timeslot duration is defined to allow the transmission of at least one largest IEEE 802.11 PLCP (physical layer convergence protocol) protocol data unit (PPDU) in one normal timeslot for the highest data rate mode. The duration of a synchronization timeslot can be shorter than that of the typical timeslots, because the clock synchronization frame, which is transmitted from an AP to a STA in this timeslot, may be shorter than an IEEE 802.11 data frame. The TDF superframe of Figure 5 is an example of a format where the slot fields are ordered as sync slot, contention slot, multicast period, downlink and uplink timeslot pairs. Other orderings of the slot fields are also possible provided that the sync slot occurs first in the superframe. For example, following orderings are also possible; (i) sync slot, downlink slots, uplink slots, contention slot, (ii) sync slot, uplink slots, downlink slots, contention slot, and (iii) sync slot, contention slot, downlink slots, uplink slots. Other organizations are also possible.

In one implementation, a typical time slot duration is about 300 us, which is enough for the STA to transmit at least one largest IEEE 802.11 PPDU in one common timeslot for 54 Mbps mode. There are a total of 62 timeslots per TDF superframe. In these timeslots, there are uplink and downlink timeslot pairs. When there are 20 STAs, each STA can be guaranteed that it has access to 680 kbps of uplink data rate. Downlink data rate depends on the occurrence of multicast data and the requirements placed on the AP for downlink data transmission. Finally, the duration of a superframe, which in one embodiment is the total duration of 61 typical timeslots and one synchronization timeslot, is about 18.6 ms and it can be defined to a different value for different usages. For example, if there is only one STA, it can be guaranteed that the STA has 4 timeslots to achieve about 18 Mbps of uplink data rate and own 18 Mbps (4 continuous timeslots) of downlink data rate. In this way, the value of a superframe duration is about 4 ms.

### Frame/Message/Signal Formats

In the IEEE 802.11 specification, three major frame types exist; data frames/messages/signals, control frames/messages/signals, and management frames/message/signals. Data frames are used to exchange data from an access point to a station and vice-versa. Several different kinds of data frames exist, depending on the network. Control frames are used in conjunction with data frames to perform area clearing operations, channel acquisition and carrier-sensing maintenance functions, and positive acknowledgement of received data. Control and data frames work in conjunction to deliver data reliably between access points and stations. More specifically, one important feature in exchanging frames is that there is an acknowledgement mechanism, and accordingly an acknowledgement (ACK) frame for every downlink unicast frame. This exists in order to reduce the possibility of data loss caused by an unreliable wireless channel. Management frames perform supervisory functions. They are used to join and leave wireless networks and move associations from access point to access point. As used herein, the term "frames" may also be referred to as messages or signals in all cases. Equivalently, the term "frames/messages/signals" may also be used to denote equivalents.

In one embodiment of the TDF system, STAs passively wait for a synchronization frame/message/signal from the AP to identify a controlling AP. The synchronization frame is a frame of data located within the sync slot (time slot 0) of Figure 5. Since STAs wait for the AP to send a synchronization frame, there is no need for the typical probe request and probe response frames found in wireless implementations of the IEEE 802.11 standard. But, acknowledgement (ACK) frames/messages/signals are used to ensure the reliability of data frame delivery.

In the TDF protocol, only some of the useful IEEE 802.11 MSDU and MMPDU types for data are used in a cable medium. For example, the data subtype in data frame types is used to encapsulate the upper layer data and transmit it between access points and stations. New management frames are needed to accommodate a clock synchronization requirement in TDF system. To realize the functionality of uplink timeslot requests, allocations, and releases, four new kinds of management frames are defined. Table 1 defines the valid combinations of type and subtype of the added frames/messages/signals in the TDF protocol.

**Table 1 New Management Frames for TDF Protocol**

| Type description | Subtype description |
|---|---|
| Management | Synchronization |
| Management | Registration request |
| Management | Registration response |
| Management | Unregistration request |
| Management | Alive notification |

### Access Point (AP) Searching and Clock Synchronization

The TDF protocol provides a distribution of timing information to all the STA nodes. A STA listens to a synchronization frame/message/signal in the sync slot of the Figure 5 superframe to decide if there is an active AP available. Once the STA enters TDF communications, the STA uses the synchronization frame to adjust its local timer, based on which the STA decides if it is its turn to send uplink frames. At any given time, the AP is the master and the STA is a slave in the synchronization procedure. If the STA has not received a synchronization frame from the associated AP for a predefined threshold period, the STA reacts as if the associated AP has stopped servicing the STA. In this instance, the STA stops communicating with the silent AP and starts to look for an active AP by listening for the synchronization frame again.

In the TDF system, all STAs associated with the same AP synchronize to a common clock. The AP periodically transmits special frames called synchronization frames that contain the AP clock information to synchronize the STAs in its local network. In one embodiment, synchronization frames are generated for transmission by the AP once every TDF superframe time and sent in the sync timeslot of the TDF superframe.

Every STA maintains a local timing synchronization function (TSF) timer to ensure it is synchronized with the associated AP. After receiving a synchronization frame, a STA always accepts the timing information in the frame. If the STA TSF timer is different from the timestamp in the received synchronization frame from the AP, then the receiving STA sets its local timer according to the received timestamp value. Further, the STA may add a small offset to the received timing value to account for local processing by the transceiver.

### STA Registration with an AP

Once a STA has acquired timer synchronization information from the synchronization frame, the STA learns when timeslot 0 occurs. If a STA is not associated with any active AP, the STA tries to register with an AP which sent a synchronization frame. The STA associates with an AP by sending Registration request frames to the AP during the contention timeslot, which is the second timeslot in a TDF superframe of Figure 5. In one embodiment, the duration of the contention timeslot and the registration request frame/message/signal structure are designed to allow for sending multiple Registration request frames in one contention timeslot. Based on the design, the contention timeslot is divided into equal length sub-timeslots.

As soon as a STA detects an active, targeted AP, the STA chooses one sub-timeslot in the contention timeslot to send registration request frame to the AP. The purpose of this action is to reduce the chance of collision when there are many STAs starting at the same time and trying to register with the same AP simultaneously. A registration request may occur according to the following method:
A. Upon allocation of an uplink timeslot, a STA stores the allocated uplink timeslot number. The allocated uplink timeslot indicates the timeslots' location in the whole pool of uplink timeslots.
B. The AP allocates the same uplink timeslot to the same STA every time the STA requests an uplink timeslot.
C. When it is time to select a timeslot in which to send a registration request frame, if there is a stored allocated timeslot value, the STA sets the timeslot number to the allocated value. If there is no such value, the STA randomly chooses one sub-timeslot in the available timeslots. The STA then sends the registration request frame to the AP in the randomly chosen timeslot.

The STA lists all data rates it supports at that time and also sends some information such as the received signal carrier/noise ratio in the registration request frame. The STA may send several successive registration request frames with different supported data rates. After sending out the frame, the STA listens for the registration response frames/messages/signals from the AP.

After receiving a registration request frame from a STA, based on the following method, the AP sends different kinds of registration response frames back to the STA in the downlink timeslots.
A. If the already allocated uplink timeslots exceeds the number of timeslots available in a superframe, the AP puts an uplink timeslot unavailable indicator in the frame body.
B. If the AP does not support any data rates listed in the supported data rates set in the registration request management frame, the AP puts an unsupported data rates indicator in the frame body.
C. If there are uplink timeslots available to allocate and common data rates that both the AP and STA support, the AP allocates one uplink timeslot and chooses a suitable common data rate according to information such as carrier/noise ratio in the STA's registration request frame, and then sends a registration response frame to the STA. The frame/message/signal body contains the allocated uplink timeslot and the chosen data rate information. After a successful registration process, the TDF STA and TDF AP reach an agreement on which uplink timeslot and data rate to use.

### Downlink Transmission

As stated above, downlink is defined as the transfer of information from an AP to a STA. In the entire TDF communication procedure, the total number of downlink timeslots may change dynamically due to the changing number of associated STAs. When the AP prepares to send frames to the associated STAs, it compares the time left in the remaining downlink timeslots with the duration needed for transmitting the specific downlink frame using the agreed data rate. Then, based on the result, it decides if the frame should be transmitted with the specific data rate during this TDF superframe. Furthermore, the AP does not need to fragment downlink frames.

### Uplink Transmission

As stated above, uplink is defined as the transfer of information from a STA to an AP. After receiving the registration response frame from the AP, the STA analyzes the frame body to see if it is granted an uplink timeslot. If not, it pauses and applies for the uplink timeslot later. If granted, the STA starts to transmit uplink traffic during the assigned timeslot using the data rate indicated in the registration response frame.

At the beginning of the uplink transmission during the assigned timeslot, the STA sends the first frame in its outgoing queue (buffer) to the AP if there is at least one outgoing frame in the queue (buffer). After that, the STA checks the second uplink frame's length and evaluates if it is possible to send the second/next buffered frame during the remaining duration in the assigned timeslot. If it is not possible to send the next buffered frame, the STA stops the uplink transmission procedure and waits to send the next buffered frame in the assigned timeslot during the next TDF superframe. If it is possible to send the next buffered frame during the remaining duration in the assigned timeslot, then the STA immediately sends the next buffered frame to the destination AP. The sending procedure continues to run in this way until the assigned timeslot has ended, or until there are no more uplink frames to transmit.

### Unregistration

If the STA decides to go off-line and stop TDF communications, the STA sends an unregistration request frame to the associated AP during its uplink timeslot, in order to inform the AP to release the allocated uplink timeslot resource. After receiving the unregistration request frame, the AP releases the uplink timeslot assigned for the STA and puts it into a free timeslot pool for future use. The released timeslot may be used in either an uplink timeslot period or in a downlink timeslot period depending on system needs.

### Alive Notification

The STA reports its aliveness by sending an alive notification frame periodically to AP during its uplink timeslot period. This is performed to allow the AP to sense if a STA unexpectedly crashes or shuts down so that the AP can release the AP resources as soon as possible. If there is no alive notification frame for a predefined threshold period, the associated AP acts as if the STA is offline, and then releases the uplink timeslot allocated for the STA. This result is similar to receiving an unregistration request frame from the STA wherein a once-allocated timeslot is returned to the pool of available time slots for future use.

In one embodiment, in order to ensure coexistence and interoperability on multirate-capable STAs, a set of rules is followed by all STAs:
A. The synchronization frames are transmitted at the lowest rate in the TDF basic rate set so that they are understood by all STAs.
B. All frames with destination unicast addresses are sent using the supported data rate selected by the registration mechanism. No station transmits a unicast frame at a rate that is not supported by the receiver station.
C. All frames with destination multicast address are transmitted at the highest rate in the TDF basic rate set.

### Wireless Dual Mode Device (WDMD) Modem

In the network architecture of Figure 1, example modem stations (STA) 120 and 140 are depicted as having WLAN RF ports to support wireless devices 138 and 158. In one embodiment, the STAs contain the WLAN RF interface ports as an end user/client interfaces. As such, a STA may have both a cable interface supporting communications between an AP and the STA, and a WLAN RF external port to support wireless user devices. In one embodiment, a STA having a cable interface and a client WLAN external port may also be termed a wireless dual mode device (WDMD). In a more general sense, the user/client interface of a dual mode device may be direct connection, a LAN connection, or a WLAN connection to the modem stations 120 and 140. But, for simplicity of discussion herein, the wireless dual mode device example discussed herein includes a cable interface to an AP and a WLAN user/client interface. However, those of skill in the art recognize that a dual mode device is any device having a cable interface to an AP and any type of user/client interface. The wireless dual mode device is an example of a dual mode device.

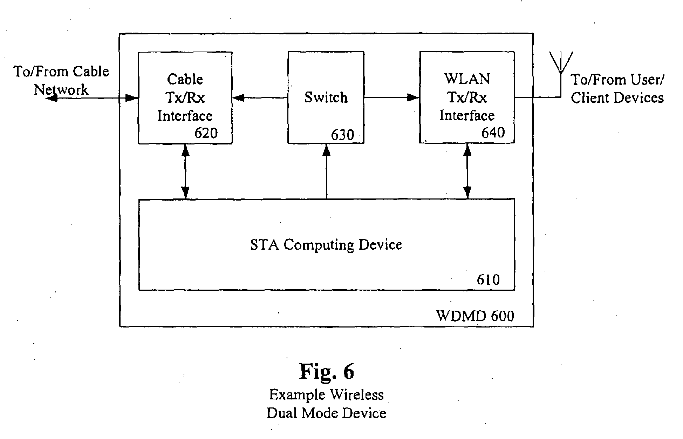

Figure 6 depicts one embodiment of a wireless dual mode device (WDMD) that acts as a STA. The WDMD STA 6 includes a STA computing device or element, such as a processor, gate array, computing logic, microprocessor, or chip set or other control function known in the art, 610 which controls communications transactions on the cable interface 620 and the WLAN interface 640 via a selection switch 630. In this respect, the WDMD STA operates in either the cable interface/ADoC system mode or the WLAN interface/wireless/client mode. The WDMD can use mature WiFi chipsets to realize the STA processor/chip set/computing device 610 functions.

The WDMD STA functions to connect with the cable interface to support bi-directional data communication in a cable network using TDF principles, while the WLAN interface functions to connect with an antenna to support bi-directional data communication in a WLAN network. The WDMD 600 swaps the data frames between the cable interface and the WLAN interface, if needed, in order to communicate with wireless-enabled user/client devices such as PCs, PDAs, routers, switches, printers, smart terminals, and the like in the WLAN network. Data frames are swapped in order to access an IP network, such as the Internet or an Intranet, via the cable interface to an AP. The wireless devices may be located within wireless range of the WDMD STA, which may be located in a home or business setting. While in WLAN mode, the wireless dual mode device operates as a WLAN access point. The WDMD 600 transmits RF energy in an ADoC frequency band (about 1 GHz) while in cable interface/ADoC mode. In the WLAN/wireless/client interface mode, a standard wireless frequency band such as the IEEE 802.11 frequency band (about 2.4 GHz) may be used. In the ADoC system/cable interface mode, the WDMD STA uses the above-described TDF protocol, which is based on a time division multiple access (TDMA) method, to transmit media access control (MAC) frames. In the WLAN mode, the WDMD uses any wireless access protocol, such as the IEEE 802.11 protocol.

### MAC Layer Procedure of the Wireless Dual Mode Device

In a WDMD STA 600, the basic access method with the AP is the TDF protocol of Figure 5, which utilizes aspects of the IEEE 802.11 MAC layer protocol as described above. Referring to Figure 5, in the TDF superframe protocol, there are a fixed number of timeslots per TDF superframe. A TDF superframe includes one sync timeslot used to send clock synchronization information from an ADoC AP to an ADoC STAs, one contention timeslot used to send a registration request for an timeslot allocation, uplink and downlink timeslot pairs used by the registered ADoC STAs to send and receive data, and a resource request timeslot to request a timeslot for use in subsequent superframes.

With this TDF protocol, the WDMD STA 600 is active during the sync slot, the contention timeslot, the allocated uplink/downlink timeslots for respective STAs, and in the resource request timeslot if a need exists for the STA to request a timeslot for the next superframe. In the remaining timeslots, the WDMD is inactive in the cable interface mode, and as a result, can switch to WLAN interface mode. This mode transition can occur if the WDMD computing device 610 is an element that can determine when it needs to communicate on the WLAN interface as opposed to the cable interface. In one embodiment, the WDMD STA generally does not operate in both cable interface mode and WLAN interface mode simultaneously. Accordingly, the two modes are generally considered exclusive in operation. During WLAN mode operation, wireless transaction data, such as data from a user/client wireless device, that is to be uplinked to an AP are placed in a buffer in the WDMD. The wireless data in the buffer are later recalled and transported (uplinked) to the AP when the dual mode device re-enters the cable interface mode. In other embodiments where greater processing capability permits, an overlap of cable interface and WLAN modes can be realized. However, the separate mode embodiment is further discussed herein.

### Power Saving Mode for the Wireless Dual Mode Device

In one aspect of the invention, the power saving (PS) mode of the IEEE 802.11 protocol is used to indicate and allow the WDMD to enter a period in which the WDMD can actively communicate with user/client wireless devices using the WLAN interface. This WLAN interface activity occurs while the WDMD STA is in PS mode with respect to the cable interface. During this PS mode time period, the AP buffers data intended for the WDMD STA so that the WDMD STA does not miss downlink data intended for it. Also, the WDMD buffers data received on the WLAN interface that requires an uplink connection to the AP from the WDMD. During the PS mode, the transaction requirement of the cable interface is deferred allowing the WDMD STA to service wireless user/client devices. The transaction requirement of the cable interface that is deferred is essentially the requirement that the station be active with respect to the cable interface for uplink and downlink timeslots of the TDF superframe.

In one aspect of the invention, the AP determines the active period for a WDMD STA according to the resource requirement from the WDMD STA, the buffered data in AP, and by power saving (PS) mechanism of IEEE 802.11. A resource requirement for the WDMD STA is a request, made by the STA, to obtain a timeslot to uplink stored data frames to the AP. An example of these stored data frames includes data frames acquired by communications with the user/client wireless devices intended for uplink to the AP. A resource request from a WDMD STA occurs in the resource requirement timeslot shown in the Figure 5 superframe for the particular STA. Typically, the resource requirement is sent before the end of a superframe and includes the number of timeslots needed for the buffered data in the STA to be uplinked. The AP determines, to some extent, when a WDMD STA can be active in the cable interface mode by communicating to the WMDM STA an indication of how many frames of data the AP has buffered for downlink to the WDMD STA. This downlink data can be a unicast downlink or a multicast downlink. In a unicast downlink, the WDMD STA can wait a number of superframes, if needed, before becoming active to accept the AP-buffered data. If the buffered data is to be multicast, the AP-buffered data is sent to the WDMD STA in a particular superframe and the WDMD STA becomes active in the cable interface mode to accept the multicast data. The PS mode of IEEE 802.11 allows the WDMD STA to remain in sleep mode with respect to the cable interface for a number of superframe time periods. An exception is that the WDMD STA must return to cable interface mode at the beginning of a superframe that contains a beacon frame.

In one embodiment of the TDF system, a TDF superframe, as shown in Figure 5, periodically transmits an IEEE 802.11 beacon frame as part of the sync slot (timeslot 0) to synchronize the WDMD STA to the associated AP. A typical beacon frame is a management frame that contains header and frame body information. As with other frames, the header includes source and destination MAC addresses as well as other information regarding the communications process. The destination address may be set to all ones, which is the broadcast medium access control (MAC) address. This instructs all STAs on the applicable channel to receive and process the beacon frame.

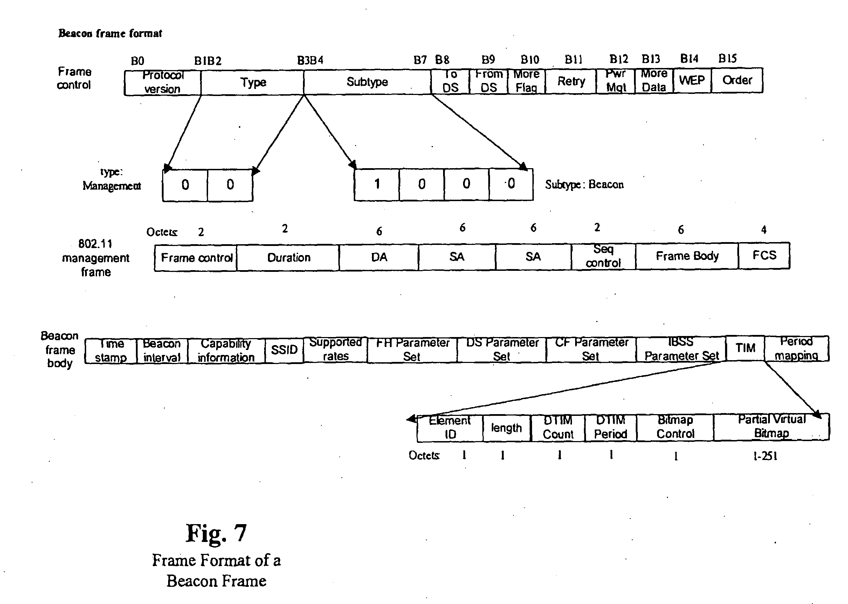

Figure 7 depicts an example of a frame control format for a beacon frame. Figure 7 also depicts a IEEE 802.11 management frame that is used to carry the frame body of the beacon frame. Figure 7 also depicts the beacon frame body placed into the IEEE 802.11 management frame including the traffic indication map (TIM) and period mapping information. Referring to the frame control bytes of Figure 7, the frame control is shown as having a management type and subtype that define the control frame as a beacon control frame. The frame control bytes form the two octets that are at the beginning of the management frame of Figure 7.

In one embodiment, the beacon's frame body carries information useful for identification and synchronization of STAs by APs. Some beacon frame body information includes a beacon interval that represents the amount of time between beacon transmissions, a timestamp used by a STA to update its local clock and enables synchronization among all stations that are associated with the same access point, a service set identifier (SSID) that identifies a specific AP and its associated STAs, a supported rates field that carries information describing the rates that are supported by the AP, and a traffic indication map (TIM) to provide additional information useful to STAs. In one embodiment, the beacon interval is an integer multiple of the superframe length. As such, a beacon frame may occur every 1, 2, 3, 4, etc. superframes.

According to an aspect of the present invention, the TIM of the beacon frame contains information indicating that there are frames buffered by the AP destined for a particular STA. When a STA listens to a beacon frame in the Sync timeslot of Figure 5, the STA can determine if the AP has buffered frames to send in a superframe. However, if the STA is in PS mode, it can remain in the PS mode until the STA decides to downlink the frames. This need may occur after many superframe periods have passed.

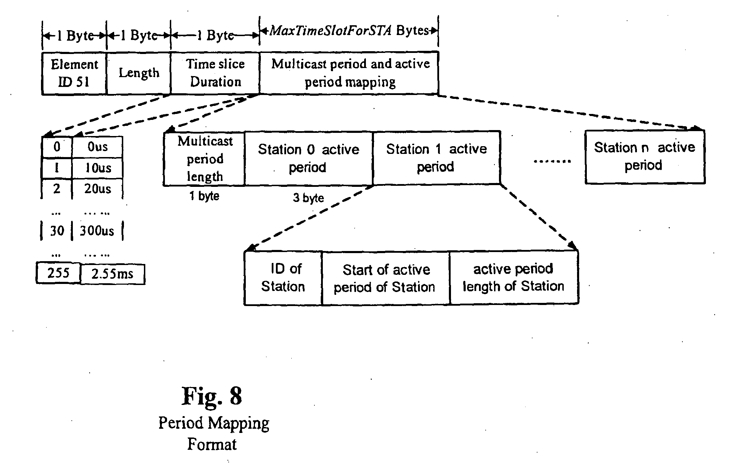

The beacon frame can also inform a WDMD STA that a multicast is about to occur. Figure 8 depicts a format used in a beacon frame that includes information of a multicast occurrence. Fields in the period mapping format of Figure 8 indicate the period length of a multicast downlink as well as the active periods prescribed to each of the STAs accommodated by the AP. In one embodiment, a STA accepts a multicast downlink even if the power saving mode is on. Thus, a beacon frame indicates to the STA whether or not it can stay in PS mode and service the WLAN interface or whether the WDMD STA must attend to the cable interface.

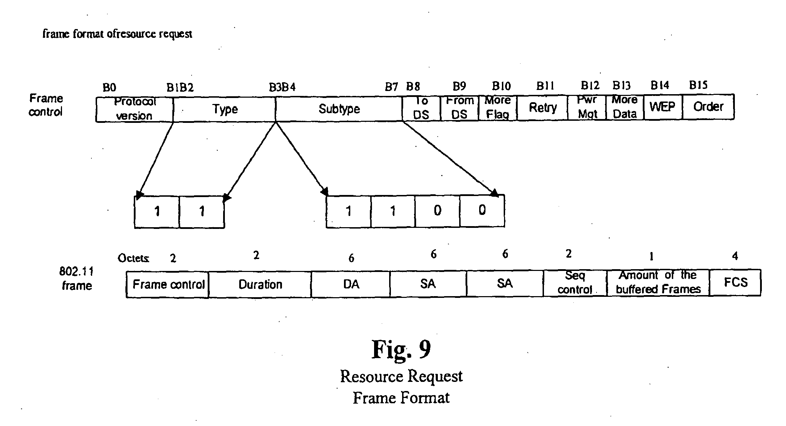

If a STA has frames of data to uplink to a STA, the STA may transmit a resource request to the AP to request a timeslot in the next superframe. The STA can emerge from PS mode in order to do this, or it may send a resource request while in the cable interface mode. In any case, the frame format of a resource request is shown in Figure 9. The resource request frame of Figure 9 includes a type and subtype that are unique to an ADoCs system. The power management bit B12 can be used by the WDMD to inform the AP of the STA's intention to enter the power saving (PS) mode. Upon receipt of this control frame by the AP, the AP starts to buffer frames that would normally have been sent to the WDMD STA in a downlink timeslot of the STA in a superframe. However, if the power management bit/flag is set, the AP buffers the STA downlink frames until the STA once again becomes cable interface active by resetting the power management flag. Concerning the example formats of Figures 7-9, those of skill in the art recognize that other format definitions that provide similar information comport with the principles and spirit of the current invention.

According to aspects of the invention, operation of the WDMD STA and AP can be as follows. When the STA is in cable interface mode, the TDF superframe-based communication occurs. To enter the power saving (PS) mode, the WDMD STA in the ADoC system sets the power management flag before the end of the active period for the STA in the TDF format. When entering power saving mode in ADoC system, the WDMD STA does not actually power down or enter sleep mode. Instead, the WDMD changes to the WLAN interface mode and communicates with the user/client devices. Once in the PS mode, the WDMD need only listen to the beacon frame which occurs periodically at the beginning of a superframe. The sync slot of the beacon frame has information which tells the WDMD STA if there is frame data that is to be downlinked from the AP to the WDMD STA. If the STA is in PS mode, it may choose to leave the buffered data in the AP or it may choose to re-activate the cable interface mode and downlink the information. If the WDMD has data to be sent to the AP and the WDMD STA wishes to get a STA timeslot allocation from the AP to uplink the data, the WDMD sends a resource request to the AP before the end of a superframe (i.e. before the next beacon frame) is sent. Then, the AP calculates the necessary timeslot information, set up the information for each communicating STA in the TIM and period mapping fields of the beacon frame, and then transmits the beacon frame to the STAs. A WDMD STA in PS mode changes to cable interface mode in order to receive a multicast message if a beacon frame informs the STA that a multicast message is to occur. For a multicast, the AP pre-calculates the multicast period according to the buffered multicast data accumulated in the AP for multiple STAs. The multicast period information is set into the beacon along with the TIM and period information. Any one WDMD STA may be included in a multicast if the WDMD STA has joined the multicast group via a registration process. During the multicast period, the addressed WDMD STA receives the multicast frames from the AP and the STA then returns to PS mode, if desired, by setting the power management flag and transmitting the resource request control frame to the AP. The AP then starts to buffer downlink data frames intended for the WDMD STA.

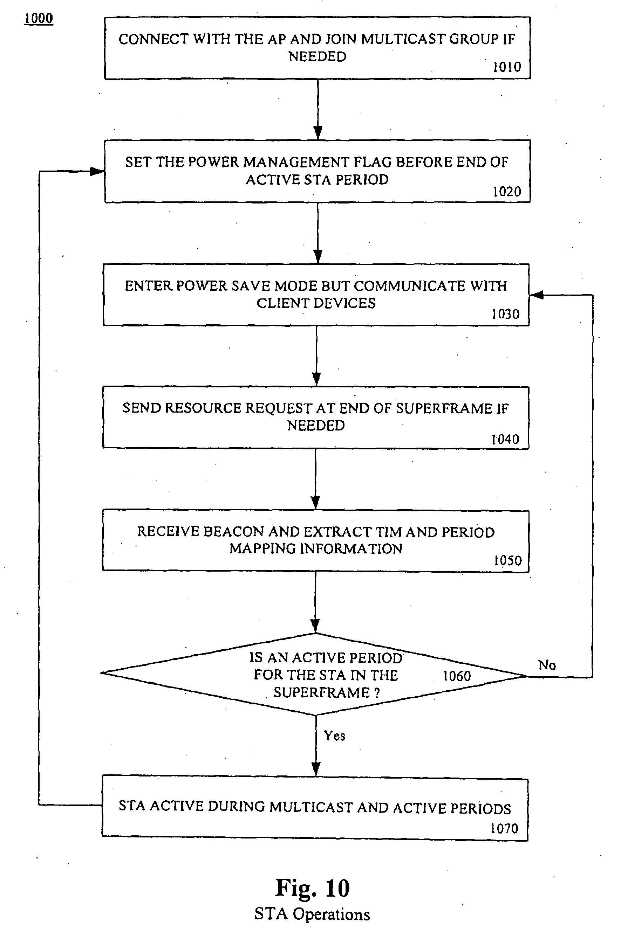

Figure 10 depicts an example flow diagram of a process 1000 that may be used by the WDMD STA in accordance with the principles of the current invention. At step 1010, the STA can connect with the AP and join a multicast group, if needed by the STA. Generally, the function of the STA may dictate whether it should belong to a multicast group. At step 1020, the power management flag may be set by the STA before the end of an active STA period (as shown in Figure 5) if it desires to enter the power saving mode. The power management flag is an indication to the AP that the STA is in power saving mode with respect to the cable interface. By setting and transmitting the asserted power management bit, the STA is indicating that transmissions on the cable interface will be suspended. At step 1030, the STA enters the power saving (PS) mode. During the PS mode, the WDMD STA does not power down, but instead, communicates with the user/client devices by switching from the cable interface mode to the WLAN interface mode. By switching to the WLAN interface mode, transmissions on the cable interface from the STA are suspended. From the AP perspective, the STA is in the power saving mode. While in the WLAN interface mode, the WDMD STA services the user/client wireless devices by conducting operations/transactions on the WLAN interface. This includes sending information or buffering data that is to be later transmitted to the AP via the cable interface. From the STA perspective, the cable interface can be ignored during the power saving mode except for beacon frame broadcast transmissions. The STA does not have to conduct transactions/operations while in power saving mode. Thus, the STA does not have to receive unicast messages from the AP or transmit uplink data while the STA is in power saving mode. One reason for this low level of cable interface activity for the STA is because the AP buffers data specifically addressed to the STA in power saving mode. The AP understands that the STA is in power saving mode and will not receive or respond to unicast messages. The AP will continue to buffer unicast data addressed to the STA while the STA is in power saving mode. The WDMD STA may remain in the PS mode servicing the WLAN interface clients for multiple superframe time periods. However, the WDMD STA periodically switches to the cable interface mode in order to receive the broadcast beacon frame information at the beginning of a TDF superframe containing beacon information. According to aspects of the current invention, the beacon information includes future activity information for the STA.

If the WDMD STA wishes to send data collected from a wireless device to the AP via the cable interface, the WDMD STA may first send a resource request frame at the end of a superframe to request a timeslot in the next superframe as in step 1040. If no information is desired to be sent by the WDMD STA, such as when the STA is buffering the data to be sent or if there is no buffered data in the STA, then step 1040 may be skipped. The next superframe beacon is received by the WDMD STA at step 1050 by exiting the power saving mode, stopping WLAN transactions, and re-entering the cable interface mode because the WDMD always switches briefly to the cable interface mode to receive periodic beacon information. The TIM information and period mapping information is extracted from the beacon at step 1050. The TIM and period mapping information of the beacon contain future station activity information concerning future transactions for the WDMD STA.

At step 1060, the WDMD STA computing device then determines if the TIM and period mapping information/future activity information indicate whether there are any upcoming active periods in the superframe for the specific WDMD STA that requires cable interface transactions. If there is no active period scheduled for the particular WDMD STA as indicated in the future activity information of the beacon frame, then the WDMD is free to return/re-enter to WLAN interface mode (by re-entering the power saving mode) and service the user/client wireless devices at step 1030. If there is an active period scheduled for the upcoming superframe, such as a unicast message, then the WDMD has the option of increasing the amount of time the STA will remain in the cable interface mode and thus refrain from entering the power saving mode. In one aspect of the invention, the STA computing device determines if increased time in the cable interface mode is required and then activates the cable interface mode to communicate with the AP during the scheduled uplink and downlink periods scheduled for the STA at step 1070. This step is also entered if the WDMD STA is subject to a multicast from the AP. After the active period, the WDMD STA may then re-assert the power management flag to inform the AP that it is entering PS mode. As before, entering PS mode allows the WDMD STA to service the user/client wireless devices in the WLAN mode. The PS mode allows the WDMD STA to mask cable interface uplink and downlink active periods in order to service the user/client wireless devices in the WLAN interface mode. This can occur because the AP buffers data to be unicast to the STA while the STA is in power saving mode. The process 1000 of Figure 10 is one example use of the principles of the current invention. Those of skill in the art recognize that deviations from the flow of process 1000 are possible that still comport with the spirit of the invention.

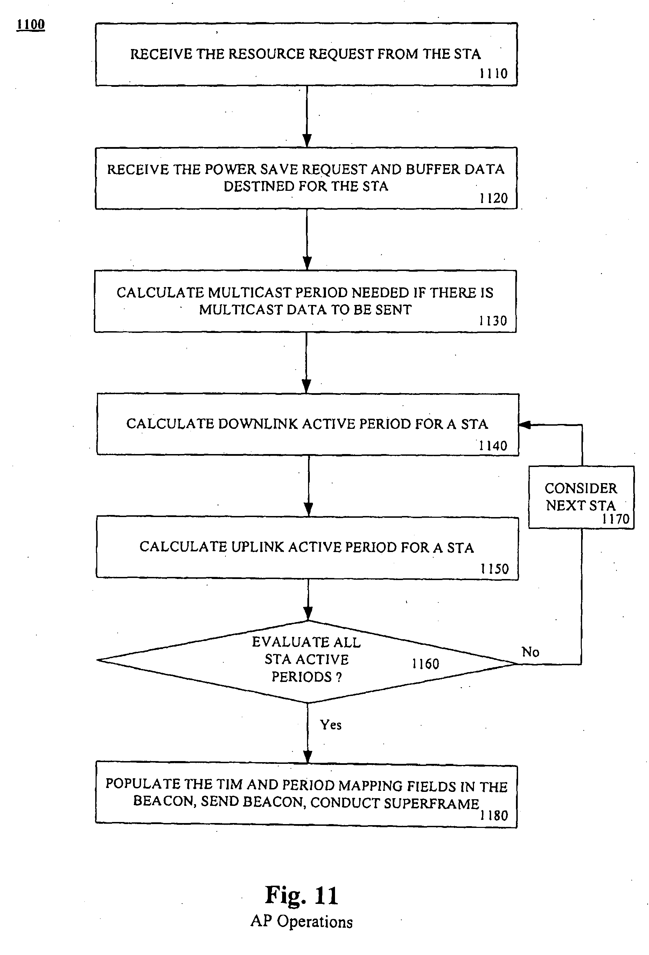

Figure 11 depicts an example flow diagram of a process 1100 that may be used by the AP in accordance with the principles of the current invention. At step 1110, the AP receives a resource request form the WDMD STA. This resource request is an indication that the WDMD STA desires an active period in the next TDF superframe. If no resources are needed, such as an uplink timeslot for the WDMD STA, then step 1110 may be skipped. However, if the WDMD STA is requesting to go into power saving mode, then the resource request of step 1110 may be used because the control frame power management bit of the resource control format may be used to signal the AP that the STA is entering PS mode. If a power saving mode request is made, then the AP, at step 1120, starts buffering downlink data intended to be unicast to the WDMD STA by the AP.

Assuming there is multicast data to be sent to the WDMD STA that is in PS mode, then the AP, at step 1130, calculates the multicast period needed in the superframe to send the multicast data to all STAs that are to receive it. If there is unicast data to be sent to the WDMD STA, then the AP calculates the downlink active period needed for the STA to receive the data at step 1140. Similarly, if there is a resource request for an uplink for the STA, then the AP calculates the uplink active period for the STA in question at step 1150.

A determination is made at step 1160 as to whether all of the STAs have been evaluated for an uplink and downlink period. If all of the STAs uplink and downlink periods have not been evaluated, then the next STA is considered in step 1170 and the process 1100 moves to step 1140. If all of the uplink and downlink periods for all STAs actively operating under the AP have had their uplink and downlink periods evaluated/calculated, then the process 1100 moves to step 1180 where the calculations are used to populate the TIM and period mapping fields of the beacon frame. The beacon frame is then transmitted in the sync slot of the TDF superframe. The AP then conducts the operation of the superframe in accordance with the TIM and period mapping information.

Features and aspects of described implementations may be applied to various applications. Applications include, for example, individuals using host devices in their homes to communicate with the Internet using an Ethernet-over-cable communication framework, as described above. However, the features and aspects herein described may be adapted for other application areas and, accordingly, other applications are possible and envisioned. For example, users may be located outside of their homes, such as, for example, in public spaces or at their jobs. Additionally, protocols and communication media other than Ethernet and IEEE 802.11 may be used. For example, data may be sent and received over (and using protocols associated with) fiber optic cables, universal serial bus (USB) cables, small computer system interface (SCSI) cables, telephone lines, digital subscriber line/loop (DSL) lines, satellite connections, line-of-sight connections, and cellular connections.

The implementations described herein may be implemented in, for example, a method or process, an apparatus, or a software program. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing or computing devices in general, including, for example, a computer, a microprocessor, an integrated circuit, or a programmable logic device. Processing devices also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data transmission and reception. Examples of equipment include video coders, video decoders, video codecs, web servers, set-top boxes, laptops, personal computers, and other communication devices. As should be clear, the equipment may be mobile and even installed in a mobile vehicle.

Additionally, the methods may be implemented by instructions being performed by a processor or other form of computing device, and such instructions may be stored on a computer-readable medium such as, for example, an integrated circuit, a software carrier or other storage device such as, for example, a hard disk, a compact diskette, a random access memory ("RAM"), a read-only memory ("ROM") or any other magnetic, optical, or solid state media. The instructions may form an application program tangibly embodied on a computer-readable medium such as any of the media listed above. As should be clear, a processor or other form of computing device, may include, as part of the processor unit, a processor-readable medium having, for example, instructions for carrying out a process.

Regarding buffers and storage devices, note that a variety of devices throughout the described implementations typically include one or more storage devices or buffers. Storage may be, for example, electronic, magnetic, or optical.

As is evident from the foregoing disclosure, implementations may also produce a signal formatted to carry information that may be, for example, stored or transmitted. The information may include, for example, instructions for performing a method, or data produced by one of the described implementations. Such a signal may be formatted, for example, as an electromagnetic wave (for example, using a radio frequency portion of spectrum) or as a baseband signal. The formatting may include, for example, encoding a data stream, packetizing the encoded stream according to any of a variety of frame structures, and modulating a carrier with the packetized stream. The information that the signal carries may be, for example, analog or digital information. The signal may be transmitted over a variety of different wired or wireless links, as is known.

## Claims

1. A method comprising:
transmitting, from a first interface of a station, an indication to suspend transmissions from the first interface;
switching the station from a first mode for conducting transactions on the first interface to a second mode for conducting transactions on a second interface of the station thereby suspending transmissions from the station on the first interface;
periodically switching the station from the second mode to the first mode to receive future activity information on the first interface and returning to the second mode.

2. The method of claim 1, wherein the step of transmitting comprises setting a bit in data sent from the station, the bit indicating that the station will enter a power saving mode.

3. The method of claim 2, wherein setting the bit comprises setting a power management bit per the IEEE 802.11 standard.

4. The method of claim 1, wherein the step of switching involves switching between a cable interface mode supporting communication with an access point and a wireless local area network interface mode supporting communication with client devices.

5. The method of claim 1, wherein the step of switching further comprises buffering data acquired while in the second mode.

6. The method of claim 1, further comprising:
determining if the station supports increased time in the first mode based on the future activity information.

7. The method of claim 6, wherein the step of determining further comprises determining if the station is assigned time periods of activity in an upcoming cable interface activity period.

8. The method of claim 6, further comprising returning to a period of suspended transmissions on the first interface if there is no scheduled period of activity in the future activity information.

9. The method of claim 6, wherein increased time in the first mode comprises time for downloading data intended for the station.

10. The method of claim 9, wherein the data intended for the station to be downloaded comprises data that was buffered by an access point during a period of suspended transmissions on the first interface.

11. An apparatus comprising:
a cable interface;
a wireless interface; and
a computing device that causes the apparatus to switch from a first mode for conducting transactions on a first interface of the apparatus to a second mode for conducting transactions on a second interface of the apparatus after sending an indication to suspend apparatus transmissions on the first interface, wherein the computing device causes the apparatus to periodically switch from the second mode to the first mode to receive a future activity information on the first interface and return to the second mode.

12. The apparatus of claim 11, wherein the indication is a power management bit in an IEEE 802.11 standard format.

13. The apparatus of claim 11, wherein the second mode is a wireless interface mode and the apparatus buffers data acquired in the second mode.

14. The apparatus of claim 11, wherein the first interface is a cable interface and the future activity information comprises beacon frame information formatted as an IEEE 802.11 frame.

15. The apparatus of claim 14, wherein the cable interface uses a time division protocol for communications on a cable network.

16. The apparatus of claim 11, wherein the second interface uses standard IEEE 802.11 frame formats to communicate with wireless devices while the apparatus is in the second mode.
